# EUROPEAN PATENT SPECIFICATION

(11) **EP 1 567 004 B1**
(45) Date of publication and mention of the grant of the patent: **20.09.2006**
(21) Application number: 02777366.2
(22) Date of filing: 08.10.2002
(51) Int. Cl.: A01K 93/00

(54) **FISHING ROD FLOAT**
ANGELRUTENSCHWIMMER
FLOTTEUR DE CANNE A PECHE

(43) Date of publication of application: 31.08.2005
(73) Proprietor: Hueso Pajares, Alfredo, 03795 Sagra (ES)
(72) Inventor: Hueso Pajares, Alfredo, 03795 Sagra (ES)
(74) Representative: Urizar Anasagasti, José Antonio
(86) International application number: PCT/ES2002/000473
(87) International publication number: WO 2004/032617

(56) References cited:
- CH-A- 563 105
- FR-A- 1 259 964
- GB-A- 716 690
- US-A- 419 574
- US-A- 3 197 914
- US-A- 3 241 262
- US-A- 3 967 407

## Description

### Object of the invention

The present float for fishing rods is based on the design of a float or buoy, mainly through the union of two semiparts that clasp the rod together with the line that hangs from the fishing rod rigging, so that the union is guided by one of the semiparts sliding with respect to the other, thus allowing the line to pass through and standard use for fishing at the same time, said semiparts being mountable and dismountable at will. A similar fishing road float according to the preamble of claim 1 is already disclosed by GB-A-716 690.

### Background of the invention

To date, in the state of the art of rod fishing, standard floats or buoys are used, which are pierced lengthways with a narrow orifice, through which fishing line is threaded, which joins together the hook and rigs on one end and the fishing rod at the other, this line being attached by its corresponding rod to the inner surface of the orifice of the float, holding the rigging fixed thereby depending on the depth at which one wishes to fish and also the fishing conditions.

Although, this is one widely used system due to its simplicity and economical price, it is also true that it brings about several drawbacks, mainly when the float has to be replaced whether due to deterioration, or because a different float is required because new or different fishing conditions are met.

For this operation the whole rigging must be dismounted, that is, the rod which fastens the line has to be freed, the hook and weight have to be dismounted, etc., the float must be changed, and afterwards the whole rigging must be assembled again. This operation may take, depending on the complexity of the parts and the dexterity of the user, between 10 and 20 minutes. This amount of time is considerably long taking into account that the operation may have to be repeated on several occasions throughout a single fishing session. Without considering the risk of manipulating the hook, changing the bait, etc.

### Description of the invention

With the fishing rod float, object of the present invention, all of these drawbacks are intended to be avoided or decreased, for this purpose it is based on a formation of a float or buoy made up of two assemblable parts, which compose the hollow inner conduct through which the fishing line passes, and into which is also inserted the rod that holds the line and preventing its involuntary sliding.

The float is divided into two parts which, once assembled, form the body of the float, that is, with the inner passage for the line to pass through. Its assembly is carried out preferably with a dovetail system, in which entrances of one of the parts slide along projections or tracks of the other part, providing a stopper that situates them together in position.

This float is place around the line, which implies that it is not necessary to dismount the whole rig in order to change the buoy or float, but rather by just loosening the rod to block the orifice and disassemble both parts of the float, one may free the cork rigging; in order to join the two pieces of the float to be put on afterwards. This operation may take about 20 to 40 seconds to carry out, considerably favouring the task and avoiding it meaning a tedious float changing process.

Therefore, a set of float sizes and different features can be available when they may need to be used, without their substitution bringing about any drawbacks or difficulties, thus facilitating trying different ones until the most appropriate is found. This is possible because the labour time is minimal.

### Description of the drawings

In order to complete the present description and with the objective of providing an improved understanding of the characteristics of the invention, the present disclosure is accompanied by a series of figures in which, with a strictly illustrative, non-limiting purpose, the following is represented:

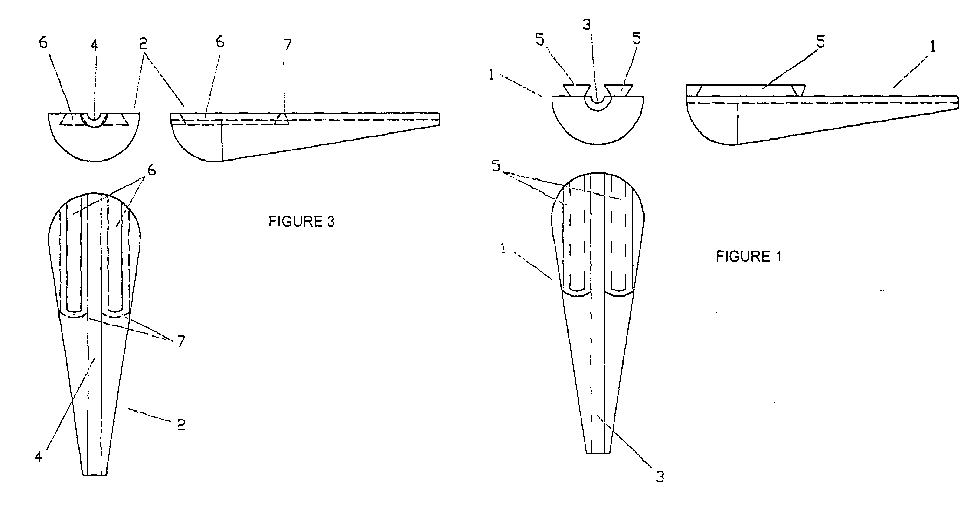

Figure 1: Raised, plan and profile view of a semlpart of the float, object of the present invention.

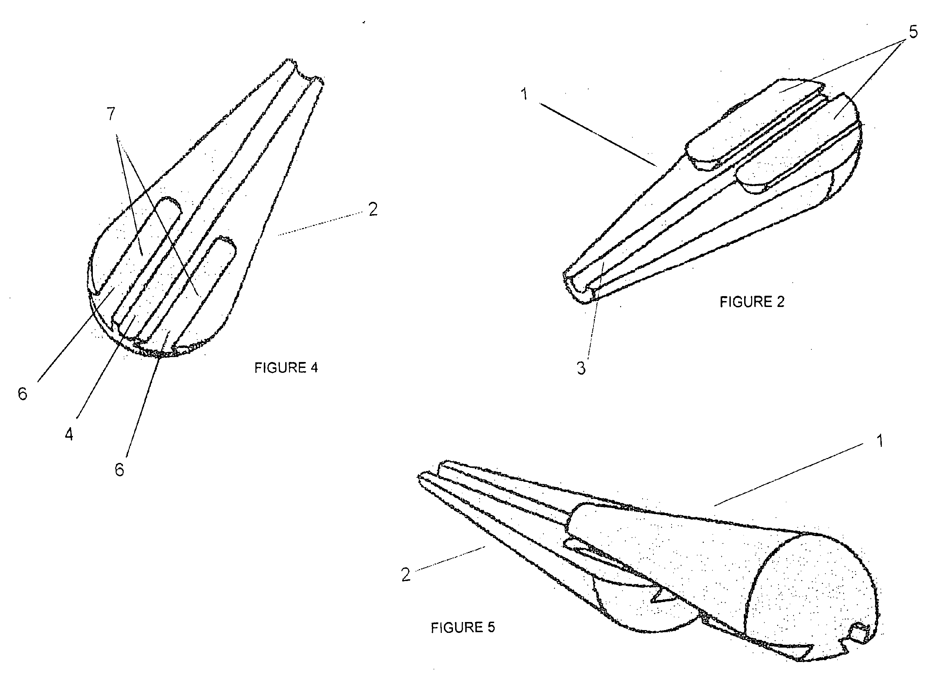

Figure 2: Side perspective view of the semipart shown in figure 1.
Figure 3: Raised, plan and profile view of the other semipart of the float, object of the present invention.
Figure 4: Upper side perspective view of the semipart shown in figure 3.
Figure 5: Upper perspective view of a pre-assembly of both semiparts of the float.

### Preferred embodiment of the invention

As can be seen in the attached figures, it is characterised firstly by a part or semipart (1) of the body of the float, and the other semipart (2), which carry, respectively, a lengthways groove (3,4). The semipart (1) is provided with projections (5) that run partially along the length of said semipart.

On the contrary, the semipart (2) is provided with a slotted area (6) that also runs lengthways with the axis of the semipart (2) but partially, said slot corresponding to the projection (5) of the other part, in size and in proportions, so that it facilitates sliding one part on the other by assembling this slot (6) and projection (5) system, which make up the guide track system.

Another possibility of the same invention is based on each of the semiparts (1,2) being provided with both a projection (5) and a slot (6), arranged so that they facilitate inserting the projection (5) in the corresponding slot (6) of the complementary semipart.

The arrangement of the lengthways groove (3) of semipart (1) corresponds with groove (4) of semipart (2) so that, once joined, they form the orifice through which the fishing line slides, and through which the fastening rod is introduced.

The slot (6) houses a stopper (7), which acts against the end of the projection (5) when it is inserted, thus obtaining in this position the final forming of the body of the float, prepared for use. The materials are those habitually used for these products.

Its use and function is quite simple, in order to dismount it from the fishing rod, the rod is simply freed, leaving it loose both semiparts (1,2) are slid against one another lengthways until the two are free of fishing line, thus facilitating the assembly of the corresponding float.

In order to do so, the line is place in the groove (3 or 4) of one of the semiparts (1 or 2, respectively), the projections (5) of one of these semiparts are placed so as to coincide with the entrances or slot (6) of the other, for which their respective formations correspond to one another; a semipart is slid over the other to its final stop position (7), the float being thus completely formed and only needing the line to be attached with the fastening rod in order for the rigging to be assembled and ready for use.

Having sufficiently described the nature of the present invention, as well as a practical embodiment of the same, it only needs to be added that changes may be introduced into both the shape and the materials and design of the same, as long as said changes do not substantially affect the features claimed below:

## Claims

1. Fishing rod float, of the kind used in order to prevent the fishing line from sinking and marking the fishing point and that are formed by two connecting semi-parts (1, 2) of the body of the float, charaterised in that:
- each said semi-part (1, 2) of the body of the float has a lengthways groove (3,4), located in the longitudinal axis of the connecting face of each said semi-part (1, 2) of semi-circular section, in such a way that when each of the semi-parts (1, 2) unite the body of the float features a longitudinal orifice, located in the longitudinal axis of the float, of circular section through which the fishing line is to slide:
- said semipart (1) has two projections (5) for the union of the semiparts (1, 2), with dovetail section, located with its edges parallel to the longitudinal axis of said semi-part (1) at each side of said longitudinal axis and at equal distances, having said projections (5) the same length and substantially less than said semipart (1);
- said semipart (2) has two slots (6) for the union of the semiparts (1,2), with dovetail section, located with its edges parallel to the longitudinal axis of said semi-part (2) at each side of said longitudinal axis and at equal distances and having said slots (6) the same length and substantially less than said semipart (2), and having said slots (6) stoppers (7) that act against the ends of the projections (5) when said projections (5) are inserted in the slots (6);

2. Fishing rod float according to claim 1, **characterised in that** the slots (6) correspond with the projections (5) in size and proportions, so that they facilitate the union of said semiparts (1, 2) by parallely sliding the projections (5) into the slots (6) up until the limit set by said stoppers (7).

## Patentansprüche

1. Schwimmer für Angelruten, mit dem Zweck, das Sinken der Angelschnur zu verhindern, sowie die Köderstelle zu markieren; diese Schwimmer bestehen aus zwei miteinander verbundenen Teilstücken (1, 2), die den Schwimmkörper bilden, und wie folgt charakterisiert werden:
- jedes der o.a. Teilstücke (1, 2) des Schwimmkörpers hat eine längliche Nut (3, 4) in der Längsachse jener Seite, die dem jeweils anderen Teilstück (1, 2) zugewandt ist. Diese Nut hat einen halbkreisförmigen Querschnitt - dergestalt, dass wenn die beiden Teilstücke (1, 2) zum Schwimmer zusammengefügt sind, sich eine längliche Öffnung mit kreisförmigem Querschnitt in der Längsachse des Schwimmers ergibt, durch welche die Angelschnur laufen kann.
- o.a. Teilstück (1) hat zwei Überstände (5) mit Zinkenprofil (schwalbenschwanzförmig) zur Verbindung der beiden Teilstücke (1, 2), deren Kanten parallel zur Längsachse des o.a. Teilstücks (1) verlaufen - auf beiden Seiten der o.a. Längsachse, und mit jeweils gleichem Abstand von ihr. Beide Überstände (5) sind gleich lang, jedoch wesentlich kürzer als o.a. Teilstück (1);
- o.a. Teilstück (2) hat zwei Schlitze (6) mit schwalbenschwanzförmigem Querschnitt zur Verbindung der beiden Teilstücke (1, 2), deren Kanten parallel zur Längsachse des o.a. Teilstücks (2) verlaufen - auf beiden Seiten der o.a. Längsachse, mit jeweils gleichem Abstand zu ihr, mit zwei Schlitzen (6); sowie Pfropfen (7), die auf die Enden der Überstände (5) drücken, wenn o.a. Überstände (5) in die Schlitze (6) eingeführt sind;

2. Schwimmer für Angelruten, gemäß ansprüch 1, charakteristisch dafür, dass die Schlitze (6) mit den Überständen (5) in Größe und Proportionen übereinstimmen, um das Verbinden der o.a. Teilstücke (1, 2) durch paralleles Einführen der Überstände (5) in die Schlitze (6), bis sie an o.a. Pfropfen (7) anstehen, zu ermöglichen.

## Revendications

1. Le flotteur de la canne à pêche, en utilisation normale servant à empêcher la ligne de pêche de couler et permettant de marquer le point de pêche et dont le corps du flotteur est constitué par deux demi parties reliées (1, 2), est **caractérisé en ce**ci que :
- chacune des demi parties (1, 2) du corps du flotteur a une rainure (3, 4), localisée dans l'axe longitudinal du coté joint de chaque demi partie (1, 2) de section semi-circulaire, de telle manière que, lorsque chacune de ces demi parties (1, 2) forme le corps du flotteur, celui-ci est équipé d'un orifice longitudinal, situé dans l'axe longitudinal du flotteur, de section circulaire à travers laquelle la ligne de pêche doit glisser ;
- ladite demi partie (1) a deux ressauts (5) permettant l'union des demi parties (1, 2), avec la section de queue d'aronde, située par ses bords parallèlement à l'axe longitudinal de ladite demi partie (1) sur chaque côté du dit axe longitudinal et à distances égales, lesdits ressauts ayant (5) la même longueur et légèrement moins que ladite demi partie (1) ;
- ladite demi partie (2) a deux fentes (6) permettant l'union des demi parties (1, 2), avec la section de queue d'aronde, située par ses bords parallèlement à l'axe longitudinal de ladite demi partie (2) sur chaque côté du dit axe longitudinal et à distances égales, les dites fentes (6) ayant la même longueur et légèrement moins que ladite demi partie (2), et les dites fentes (6) positionnées dans les taquets (7) qui agissent en butée des ressauts (5) quand lesdits ressauts (5) sont insérés dans les fentes (6);

2. Le flotteur de la canne à pêche selon la revendication 1, est **caractérisé en ce que** les fentes (6) correspondent aux ressauts (5) en taille et proportions, de sorte qu'elles facilitent l'union des dites demi parties (1, 2) en glissant parallèlement les ressauts (5) dans les fentes (6) vers le haut jusqu'à la limite définie par lesdits taquets (7).
